# EUROPEAN PATENT SPECIFICATION

(11) **EP 2 602 726 B1**
(45) Date of publication and mention of the grant of the patent: **18.03.2020**
(21) Application number: 12194300.5
(22) Date of filing: 26.11.2012
(51) Int. Cl.: G06F 3/12, G06F 16/957

(54) **Information processing apparatus, information processing method, and storage medium storing program**
Informationsverarbeitungsvorrichtung, Informationsverarbeitungsverfahren und Speichermedium-Speicherprogramm
Appareil de traitement d'information, procédé de traitement d'information et programme de support de stockage correspondant

(30) Priority: 08.12.2011 JP 2011269395
(43) Date of publication of application: 12.06.2013
(73) Proprietor: CANON KABUSHIKI KAISHA, Ohta-ku Tokyo 146-8501 (JP)
(72) Inventor: Okuma, Satoshi, Ohta-ku, Tokyo (JP)
(74) Representative: Hitching, Peter Matthew

(56) References cited:
- US-B1- 6 674 453
- HEWLETT-PACKARD COMPANY ET AL: "Providing workflow web applications with in-band peripheral device control mechanism", RESEARCH DISCLOSURE, MASON PUBLICATIONS, HAMPSHIRE, GB, vol. 530, no. 71, 1 June 2008 (2008-06-01) , page 552, XP007138275, ISSN: 0374-4353
- F. David Mcritchie: "Internet Explorer Right-Click Menus", , 30 April 2011 (2011-04-30), pages 1-5, XP055056511, Retrieved from the Internet: URL:http://dmcritchie.mvps.org/ie/rightie6 .htm [retrieved on 2013-03-14]
- Anonymous: "Fragment identifier - Wikipedia", , 13 July 2011 (2011-07-13), XP055439601, Retrieved from the Internet: URL:https://en.wikipedia.org/w/index.php?t itle=Fragment_identifier&oldid=439234353 [retrieved on 2018-01-10]

## Description

### BACKGROUND OF THE INVENTION

### Field of the Invention

The present invention relates to an information processing apparatus, information processing method, and storage medium storing a program, which process a document received from a Web server.

### Description of the Related Art

Conventionally, it is universally prevalent that an information processing apparatus such as an MFP including a Web browser function uses services provided by a Web server on a network by establishing a connection to the Web server. The Web server can provide services to the information processing apparatus by various Web applications such as a document server function.

The information processing apparatus acquires a document from the Web server, and can print and save the document by its print function and storage saving function. In this case, processing to be applied to the document by the information processing apparatus is selected by the user of the information processing apparatus. For example, when the user selects print processing, a print setting screen, which is originally built in the information processing apparatus, is displayed, and allows the user to make print settings.

Japanese Patent Laid-Open No. 2006-285461 describes a Web client apparatus which does not locally hold previously downloaded print data, the Web client downloads from the server print data having the same print properties as those of the previous print data downloaded from the previous server under the same request conditions as the previous request conditions, and prints the print data.

In a system including the aforementioned information processing apparatus, such as an MFP and the Web server, the information processing apparatus is often used as a terminal in a workflow system. In this case, a Web browser is installed in the information processing apparatus as embedded software, so as to allow a Web application of the Web server to provide a user interface in that workflow. Then, the user can undertake operations according to the standardized user interface in the workflow system, and need not use a wide variety of operation screens for respective functions (which are originally built in the information processing apparatus) thus improving the convenience.

However, in such a system, when the user makes settings for a document acquired from the Web server on a setting screen, which is originally built in the information processing apparatus, the settings may conflict with the original settings of the document on the Web server. After the user acquires a document from the Web server, and selects processing such as print processing on the Web browser, if a print setting screen is further displayed independently by the Web browser, the number of steps (man-hour) for selecting the settings on the information processing apparatus does take additional time. In general, when the Web server issues a print setting instruction of a document via a printer driver and the like, complex reprocessing of the settings is required and the reprocessing does consume Web resources of the network and device resources of the information processing apparatus.

In "providing workflow web applications with in-band peripheral device control mechanism" Research Disclosure, vol 530, no 71, page 552 it is disclosed that a processing such as a print and a scan is executed according to a user's operation on a browser.

In "Fragment identifier - Wikipedia",13 July 2011 (https://en.wikipedia.org/w/index.php? title=Fragment_identifier&oldid=439234353), the use of fragment identifiers in URLs to define commands performed by a client accessing a document through URL is disclosed.

### SUMMARY OF THE INVENTION

An aspect of the present invention is to eliminate the above-mentioned problems with the conventional technology. The present invention provides an information processing apparatus, information processing method, and storage medium storing a program, which efficiently apply processing to a document received from a Web server.

The present invention in its first aspect provides an information processing apparatus as specified in claims 1 to 2.

The present invention in its second aspect provides an information processing method as specified in claims 3 and 4.

The present invention in its third aspect provides a computer-readable storage medium storing a program as specified in claim 5.

According to the present invention, processing can be efficiently applied to a document received from a Web server.

Further features of the present invention will become apparent from the following description of exemplary embodiments with reference to the attached drawings.

### BRIEF DESCRIPTION OF THE DRAWINGS

Fig. 1 is a view showing the overall configuration of a document processing system;
Fig. 2 is a block diagram showing the arrangement of an MFP;
Fig. 3 is a block diagram showing the arrangement of a Web server;
Fig. 4 is a block diagram for explaining the software configuration between the MFP and Web server;
Fig. 5 is a flowchart showing the sequence of processing between the Web browser and a Web application according to the first embodiment;
Figs. 6A and 6B are views showing examples of screens displayed on an operation display unit of the MFP;
Figs. 7A and 7B are views showing examples of screens displayed on the operation display unit of the MFP;
Fig. 8 is a flowchart showing the sequence of document processing on the Web browser side;
Fig. 9 is a flowchart showing the sequence of document processing on the Web browser side according to the second embodiment; and
Fig. 10 is a view showing an example of a screen displayed on the operation display unit of the MFP.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. Note that the same reference numerals denote the same parts, and a description thereof will not be repeated.

### First Embodiment

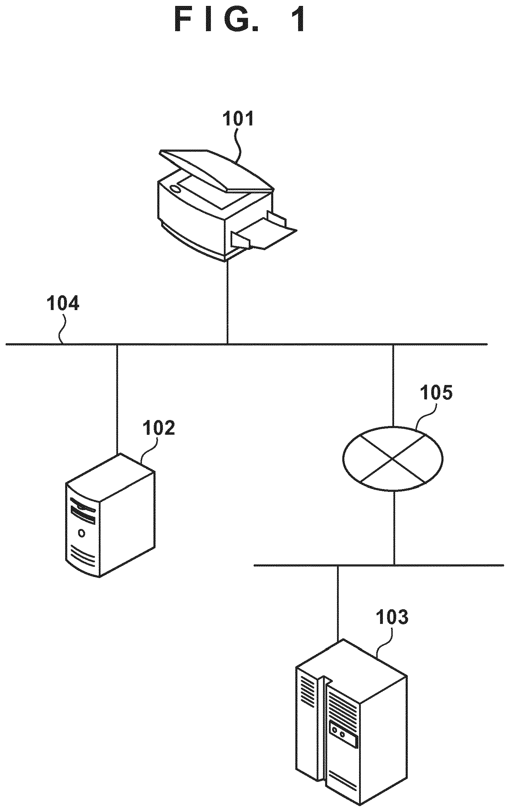

Fig. 1 is a view showing the overall configuration of a document processing system. In this system, an MFP 101 as an example of an information processing apparatus, and Web servers 102 and 103 are connected via networks such as a LAN 104 and the Internet 105 to be able to communicate with each other. The MFP 101 is a so-called Multifunction Peripheral. The MFP 101 comprises scan functionalities for generating scan data from a printing medium, such as a paper sheet, and print functionalities for forming and printing an image on a printing medium based on the scan data. Also, the MFP 101 comprises print functionalities for forming and printing a document on a printing medium based on document data received via the network. Furthermore, the MFP 101 incorporates a Web browser 400 and the Web browser 400 is adapted for acquiring contents such as portable document format - in the following called PDF - data and hypertext markup language -in the following called HTML - data stored in the Web server 102 or 103 and for displaying the acquired contents on an operation display unit 211.

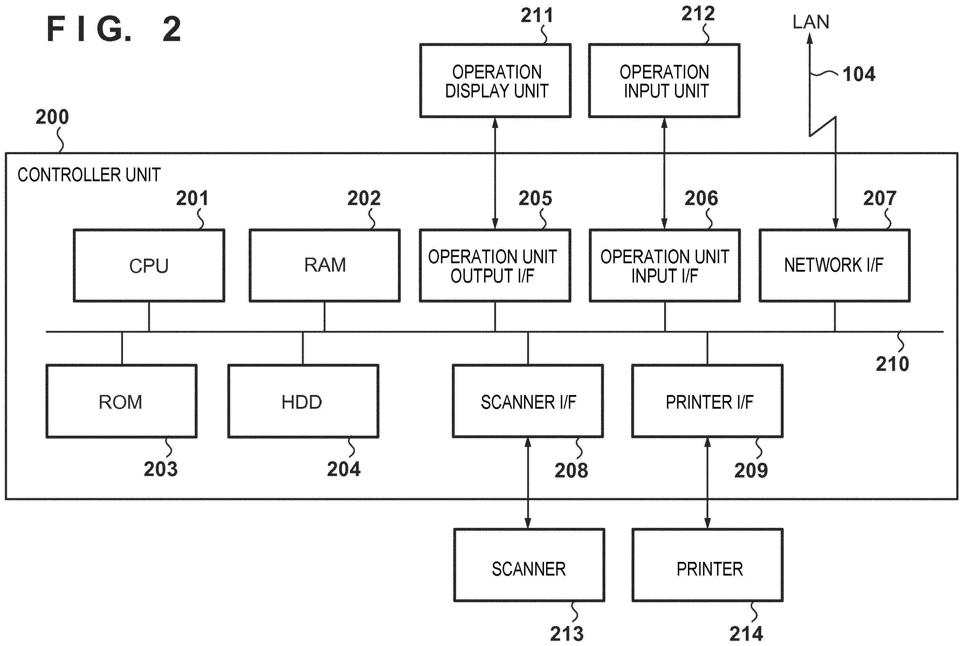

Fig. 2 is a block diagram showing the arrangement of the MFP 101. A scanner 213, printer 214, operation display unit 211, operation input unit 212, and the local area network - in in the following called LAN -104 are connected to a controller unit 200 of the MFP 101. A central processing unit - in the following called CPU - 201 of the controller unit 200 executes various control programs to control respective units of the MFP 101 (not shown in Fig. 2). The CPU 201 boots up the MFP 101 based on a boot program stored in a read only memory - in in the following called ROM - 203. Also, the CPU 201 reads out control programs stored in an - in in the following called HDD - 204, and executes respective processes using a random-access-memory - in in the following called RAM - 202 as a work area. The HDD 204 stores various control programs required to implement functions of the Web browser 400 (not shown in Fig. 2). Also, the HDD 204 stores scan data scanned by the scanner 213 and document data acquired from the external Web server 102 or 103 (not shown in Fig. 2) via a network interface - in the following called I/F - 207. The HDD 204 corresponds to an address database 411 (not shown in Fig. 2), which stores an address of the Web server 102 and the like. The address database 411 will be described later.

An operation unit output I/F 205 operates as an interface with the operation display unit 211 for transmitting data to the operation display unit 211. An operation unit input I/F 206 operates as an interface with the operation input unit 212 for receiving input data from the operation input unit 212. The network I/F 207 is adapted to be an interface to the LAN 104, especially for transmitting and receiving input/output data from/to the LAN 104. A scanner I/F 208 operates as an interface with the scanner 213, especially for transmitting and receiving image data and control data to/from the scanner 213. A printer I/F 209 operates as an interface with the printer 214, especially for transmitting document data and control data to the printer 214. A system bus 210 interconnects the aforementioned units.

The operation input unit 212 comprises input units, such as a touch panel and hardware keys, and operates as a graphical user interface for selecting instructions and settings by the user. The operation display unit 211 comprises display devices, such as an LCD and LEDs, and operates as an interface for displaying data. The scanner 213 comprises an image sensor such as a charge-coupled device - in the following called CCD, and acquires scan data by optically scanning a printing medium. The printer 214 prints scan data and document data on printing media, such as paper sheets.

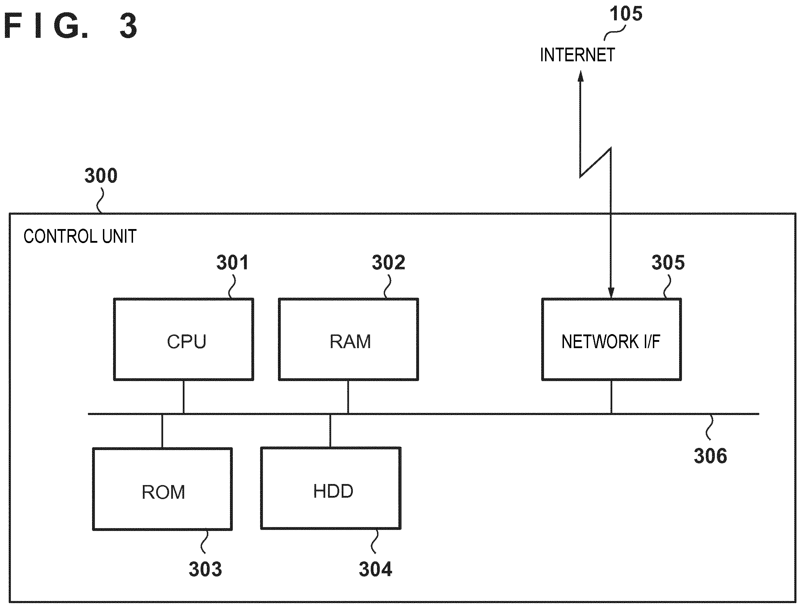

Fig. 3 is a block diagram showing the arrangement of the Web server 102, 103 (not shown in Fig. 3). The Web server 102, 103 may be a general-purpose information processing apparatus, such as a PC. The Web server 102, 103 will be described below. The Web server 102, 103 has a control unit 300 adapted to establish a connection to the Internet 105. A CPU 301 of the control unit 300 executes various control programs for controlling the operations of the overall Web server 102, 103. The CPU 301 reads out control programs stored in a ROM 303 and HDD 304, and executes respective processes using a RAM 302. The HDD 304 stores various control programs required to implement functions of a Web application 421 (not shown in Fig. 3). Also, the HDD 304 stores screen contents and documents to be provided by the Web application 421 and corresponds to a content database 422 (not shown in Fig. 3). A network I/F 305 operates as an interface with the Internet 105, especially for transmitting and receiving input/output information from/to the Internet 105. A system bus 306 interconnects the aforementioned units.

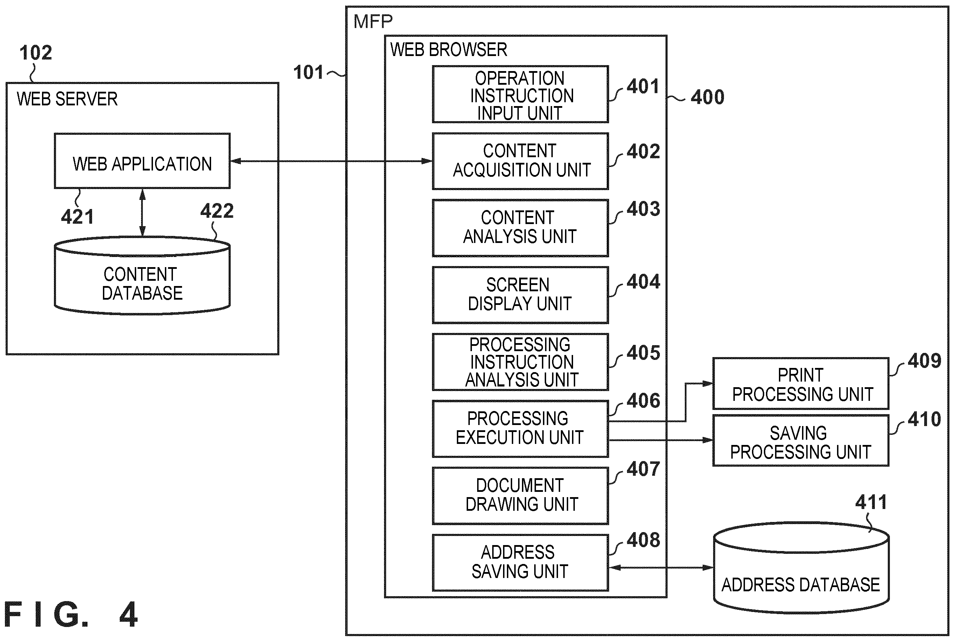

Fig. 4 is a block diagram disclosing the arrangement between the MFP 101 and Web server 102. Respective units from an operation instruction input unit 401 to a saving processing unit 410 are implemented when the CPU 201 (not shown in Fig. 4)of the MFP 101 reads out and executes control programs stored in the ROM 203 (not shown in Fig. 4) or HDD 204 (not shown in Fig. 4). Also, the Web application 421 is implemented when the CPU 301 (not shown in Fig. 4) of the Web server 102 reads out and executes control programs stored in the ROM 303 (not shown in Fig. 4) or HDD 304 (not shown in Fig. 4).

The MFP 101 comprises the Web browser 400, a print processing unit 409, and a saving processing unit 410. The Web browser 400 is installed as embedded software on the MFP 101. Additionally, the MFP 101 comprises an operation instruction input unit 401 and an address saving unit 408.

The embedded software of the Web browser 400 will be described below. For example, when the MFP 101 is used as a terminal in a workflow system, the embedded software of the Web browser 400 is installed on the MFP 101 allowing the Web server 102 to provide a graphical user interface on the MFP 101. In case the MFP 101 is used as a terminal in the workflow system, the user can use the standardized user interface on the MFP 101 as a terminal of the workflow system, and need not to use the wide variety of operation screens for respective functions provided by the MFP 101 itself, which improves the convenience and operability.

The operation instruction input unit 401 of the Web browser 400 acknowledges an input instruction from the user via the operation unit input I/F 206 (not shown in Fig. 4). For example, the operation instruction input unit 401 acknowledges user instructions, such as an input of a URL address of the Web server 102, 103 as a source of a content to be acquired, and a click instruction of a link on a displayed content. A content acquisition unit 402 communicates with the Web server 102 via the network I/F 207 (not shown in Fig. 4). For example, the content acquisition unit 402 transmits a content request to the Web server using an HTTP protocol, and the like, in response to a user instruction, and receives a content from the Web server 102 as a response to the request. A content analysis unit 403 analyzes the content acquired by the content acquisition unit 402 and displays the content and/or the content analysis on the operation display unit 211 (not shown in Fig. 4). According to this embodiment, the content comprises, for example, structured language files such as HTML files and document data such as PDF files. An HTML file describes the substance of a display screen to be displayed on the operation display unit 211. Types of these contents are identified by an HTML header element called [Content-type]. The content analysis unit 403 identifies a content type with reference to that [Content-type].

A screen display unit 404 displays the data generated by the content analysis unit 403 or a document drawing unit 407 on the operation display unit 211 via the operation unit output I/F 205 (not shown in Fig. 4). A processing instruction analysis unit 405 determines whether or not settings of each processing for a document received from the Web server 102, 103 is provided, in case settings have been provided the processing instruction analysis unit 405 analyzes the instruction. An instruction of each processing for a document is attached as a query parameter (corresponding to settings/instruction) to a URL requested from the MFP 101. Or an instruction may often be attached to an HTML extension header or the like. The instruction comprises a print instruction, display instruction, saving instruction of a document, or the like, and a print count, saving location, or the like is set for each instruction as the aforementioned query parameter.

A processing execution unit 406 is adapted for processing the document according to the instruction and the processing instruction analysis unit 405 analyses the instruction. The processing execution unit 406 transmits a print instruction to the print processing unit 409, a saving instruction to the saving processing unit 410, a drawing instruction to the document drawing unit 407, and the like according to the instruction substance. Also, the processing execution unit 406 determines whether or not the designated processing is executable in the MFP 101. Upon reception of an instruction from the processing execution unit 406, the document drawing unit 407 generates a display for displaying a document on the operation display unit 211. An address saving unit 408 requests the user to provide input a URL address of the Web server 102, 103 by accepting a document processing instruction and the address saving unit 408 saves the provided URL address in the address database 411. The URL address input operation will be described later in the second embodiment. The print processing unit 409 receives document data and print settings from the processing execution unit 406, and prints a document by using the designated print settings, received via the printer I/F 209 (not shown in Fig. 4). The saving processing unit 410 receives document data and saving settings from the processing execution unit 406 and saves the document data at a designated location in the HDD 204.

The Web server 102 comprises the Web application 421. The Web application 421 acquires and modifies a content from the content database 422 in response to a request from the Web browser 400, and sends the content to the MFP 101. The content database 422 stores HTML data, document data, and the like, to be displayed on the operation display unit 211 by the Web browser 400 of the MFP 101.

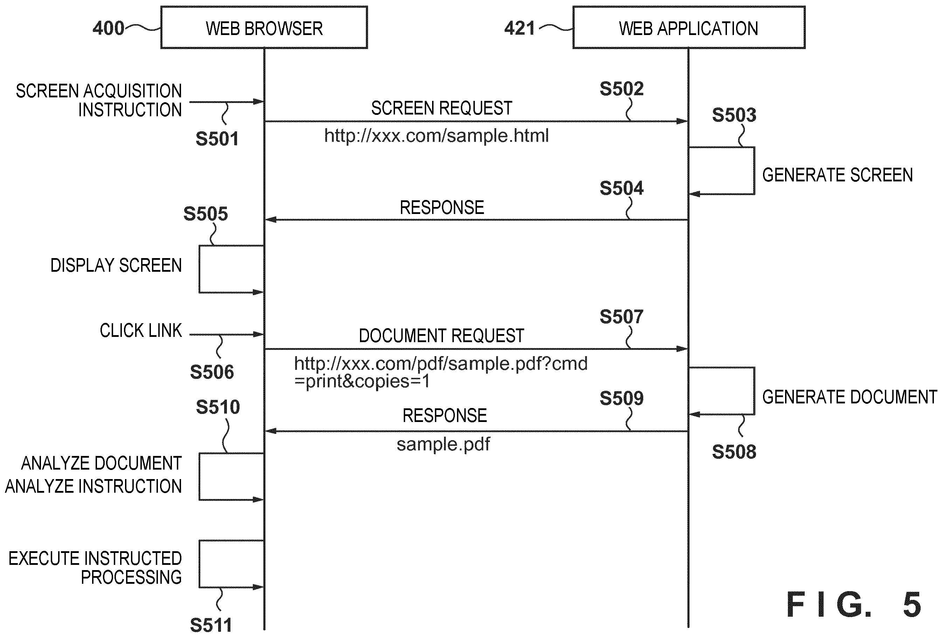

Fig. 5 is an Unified Modeling Language workflowchart showing the sequence of workflows between the Web browser 400 on the MFP 101 (not shown in Fig. 5) and the Web application 421 on the Web server 102 (not shown in Fig. 5).

In step S501, the Web browser 400 of the MFP 101 acknowledges an instruction from the user. This instruction is transmitted, for example, when the user provides an URL address registered as favorites or the like, or directly inputs the URL address. In this example, assume that the Web browser 400 acknowledges the instruction when the user enters a URL address [http://xxx.com/sample.html]. In step S502, the Web browser 400 transmits a content acquisition request to the URL address initiated by the acknowledgment of the instruction in step S501. In this example, the content acquisition unit 402 (not shown in Fig. 5) transmits an acquisition request of a content [sample.html] to a server [xxx.com]. [Sample.html] is an image file (selection screen display file) for displaying a selection list and/or image, and each selection item refers to a plurality of processes executable for the desired document.

In step S503, the Web application 421 of the Web server 102 corresponding to the address [xxx.com] acquires the content [sample.html] requested from the MFP 101 from the content database 422 (not shown in Fig. 5). In step S504, the Web application 421 sends the content [sample.html] requested in step S502 to the Web browser 400 of the MFP 101 as a response. In step S505, the content acquisition unit 402 (not shown in Fig. 5) of the Web browser 400 receives the content [sample.html]. Then, the content analysis unit 403 of the Web browser 400 generates a selection screen based on the received content [sample.html], and the screen display unit 404 (not shown in Fig. 5)displays that selection screen on the operation display unit 211 (not shown in Fig. 5).

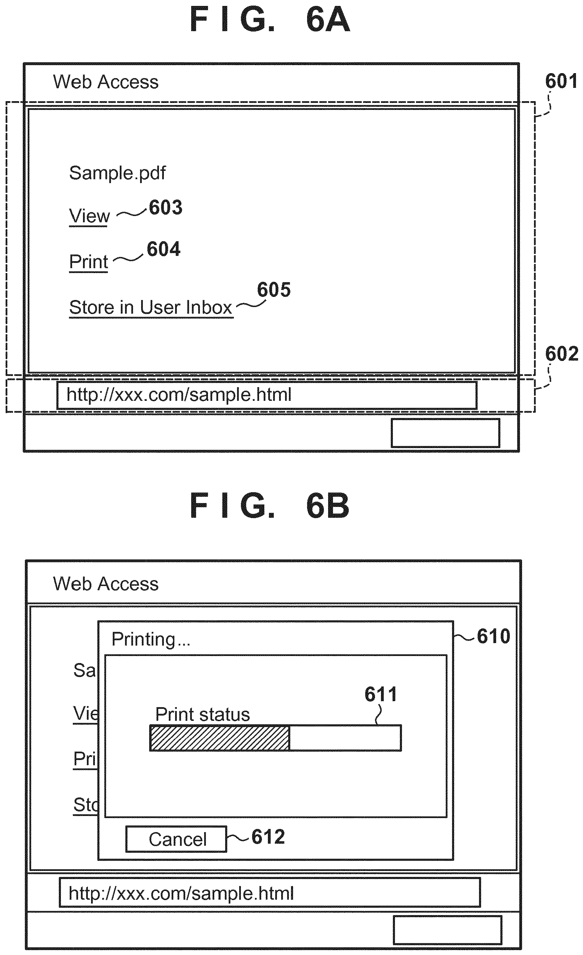

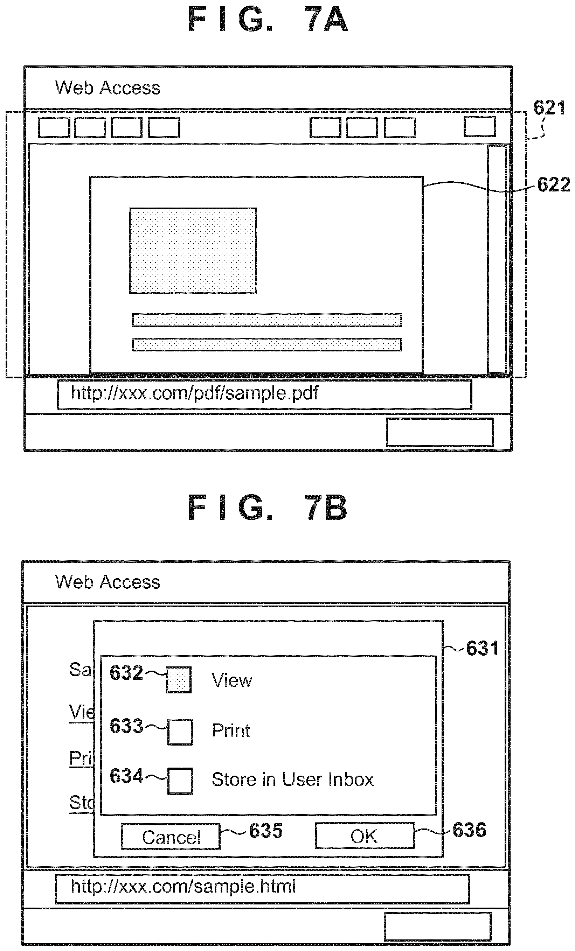

Screens to be displayed on the operation display unit 211 will be described below. Figs. 6A, 6B, 7A, and 7B are views showing examples of screens to be displayed on the operation display unit 211 (not shown in Figs. 6A, 6B, 7A, and 7B). These screens are displayed on the operation display unit 211 via the operation unit output I/F 205 (not shown in Figs. 6A, 6B, 7A, and 7B) by the screen display unit 404 of the Web browser 400. Fig. 6A shows an example of the screen displayed in step S505. A content display area 601 displayed on the operation display unit 211 displays the substance of the acquired content, for example, [sample.html]. Also, an address display area 602 displays a URL address (position information) of the content displayed on the content display area 601, for example, [http://xxx.com/sample.html]. Links 603 to 605 are references and represent links to other contents in the selection screen display file, and refer to a plurality of processes [Sample.pdf]. When the user selects one of these references on the selection screen, he/she can select a content linked with the corresponding reference respectively.

An overview of an example content [sample.html] shown in Fig. 6A comprises the following instructions.

```
      Sample.pdf<br><br>
       <a href="http://xxx.com/pdf/sample.pdf?
      cmd=view">View</a><br><br>
      <a href="http://xxx.com/pdf/sample.pdf?
      cmd=print&copies=1">Print</a><br><br>
       <a href="http://xxx.com/pdf/sample.pdf?
      cmd=store&boxnum=10">Store in User
   Inbox</a><br><br>
```

Each individual reference refers to an URL address of a content[href]. In this embodiment of Fig. 6A, a PDF file [pdf/sample.pdf] is the content of the link destination. However, different query parameters may refer to other addresses or links. In this embodiment of Fig. 6A, a query parameter is, for example, [cmd=view], and represents processing in connection with the PDF document [sample.pdf]. For example, [cmd=view] represents a view display instruction, [cmd=print] represents a print instruction, and [cmd=store] represents a storage instruction. The query parameter can define various setting values of document processing, such as a two-sided print designation in addition to the number of copies to be printed by joining instructions using [&]. In this embodiment of Fig. 6A, the Web application 421 (not shown in Fig. 6A)of the Web server 102 provides the content in connection with the link destination in combination with the aforementioned query parameter in step S503 not shown in Fig. 6A). Fig. 6A shows only one type of the reference [Print] in association with print processing. For example, another reference [Print2] may be displayed. A description of [Sample.html] corresponding to that [Print2] may represent, for example, an instruction (to print two copies) different from [Print] as follows.

```
      <a href="http://xxx.com/pdf/sample.pdf?
  cmd=print&copies=2">Print</a><br><br>
```

Referring back to Fig. 5, after the screen is displayed in step S505 (an example display is shown in Fig. 6A), the user selects a desired reference on the screen, shown in Fig. 6A by selecting the reference in step S506 (not shown in Fig. 6A). According to this embodiment, the user selects the reference of the link 604 in Fig. 6A. As for the link 604, [sample.html] comprises the description [<a href="http://xxx.com/pdf/sample.pdf? cmd=print&copies=1">Print</a><br><br>]. Additionally, in step S507 (not shown in Fig. 6A), the content acquisition unit 402 of the Web browser 400 transmits an acquisition request of a content based on the description [/pdf/sample.pdf?cmd=print&copies=1] to the Web server 102 [xxx.com].

In step S508 (not shown in Fig. 6A), the Web application 421 on the Web server 102 receives the content requested from the MFP 101. For example, the Web application 421 receives a document corresponding to [/pdf/sample.pdf] from the content database 422 (not shown in Fig. 6A). After receiving the document from the content database 422, the query parameter representing the document processing instruction is ignored. In step S509 (not shown in Fig. 6A), the Web application 421 sends the content [/pdf/sample.pdf] received from the content database 422 to the MFP 101 as a response.

In step S510 (not shown in Fig. 6A), the Web browser 400 of the MFP 101 determines the type of the content [/pdf/sample.pdf] sent from the Web application 421 on the Web server 102. The content analysis unit 403 of the Web browser 400 determines with reference to [Content-type] of the http header of the document request in step S507, whether or not the content received in step S509 can be processed by the MFP 101. For example, if [Content-type] indicates a PDF file expressed by [application/pdf], the Web browser 400 determines that the content is of the type, which can be processed by the MFP 101. Therefor the document of the type can be processed by the MFP 101 and the processing instruction analysis unit 405 (not shown in Fig. 6A) of the Web browser 400 determines whether or not document processing is appropriated for the relevant document. This determination process is accompanied by the evaluation, whether or not a query parameter instructing the document processing is attached to the document at the time of the content acquisition request in step S507. When the query parameter is attached, the processing instruction analysis unit 405 further evaluates if a document processing instruction is attached to the query parameter. For example, when [cmd=print] is appended as the query parameter, the processing instruction analysis unit 405 determines that a print execution instruction of the PDF document is designated. Then, the processing instruction analysis unit 405 also recognizes that [1 copy] is set as the number of copies to be printed when an instruction [copies=1] is attached.

If the instruction [cmd=view] is attached as the query parameter, the processing instruction analysis unit 405 determines that a screen display instruction of the document is selected. If the instruction [cmd=store&boxnum=10] is attached as the query parameter, the processing instruction analysis unit 405 determines that a storage instruction to a user box No. 10 of storage locations called user boxes in the HDD 204 (not shown in Fig. 6A) is selected for the document. As described above, the content analysis unit 403 analyzes the instruction substance of the document processing based on the query parameter.

In step S511 (not shown in Fig. 6A), the processing execution unit 406 (not shown in Fig. 6A) of the Web browser 400 executes the document processing analyzed in step S510. For example, when [cmd=print&copies=1] is attached as the query parameter, the processing execution unit 406 instructs the print processing unit 409 to print one copy of the document received in step S509.

Fig. 6B discloses another embodiment of a screen displayed on the operation display unit 211 (not shown in Fig. 6B) in step S511 (not shown in Fig. 6B). A print execution dialog 610 is displayed when print processing of the document by the MFP 101 (not shown in Fig. 6B) is in progress. A progress bar 611 indicates a progress status of the print processing of the document. A cancel button 612 allows the initiation of a print cancel instruction by the user for the relevant document. According to this embodiment, if the user selects the link 604 in Fig. 6A in step S506 (not shown in Fig. 6B) and the selected print processing of the document is proceeded, after the finishing of the print processing the screen shown in Fig. 6B is displayed as a follow-up display.

If the user selects the link 603 in step S506, a query parameter of a document display instruction is attached to transmit an acquisition request of the content in step S507 (not shown in Fig. 6B). According to this embodiment, the processing instruction analysis unit 405 (not shown in Fig. 6B), determines in step S510 that the document display instruction is designated by the query parameter, and the processing execution unit 406 (not shown in Fig. 6B) instructs, in step S511 (not shown in Fig. 6B), the document drawing unit 407 (not shown in Fig. 6B) to display the document received in step S509. As a result, the document drawing unit 407 displays the document on the content display area 601. Fig. 7A is a view showing an example of a screen displayed on the operation display unit 211 (not shown in Fig. 7A) in step S511 (not shown in Fig. 7A). The document is displayed as an image 622 on a document display area 621. The document display area 621 is the same area as the content display area 601 in Fig. 6A. In case of this example, when the user selects the link 603 in Fig. 6A in step S506, the document display processing is executed, and the screen shown in Fig. 7A is displayed.

If the processing instruction analysis unit 405 (not shown in Fig. 7A) determines in step S510 (not shown in Fig. 7A) that no document processing is designated for the document, the processing execution unit 406 (not shown in Fig. 7A) requests, in step S511 (not shown in Fig. 7A), an user input about the further processing for the document received in step S509. Fig. 7B is a view showing an example of a screen displayed when the processing instruction analysis unit 405 (not shown in Fig. 7B) requests the user input about document processing in step S511 (not shown in Fig. 7B). The screen shown in Fig. 7B is a dialog screen originally built in the MFP 101 (not shown in Fig. 7B). A document processing inquiry dialog 631 displays choices of processes of the document received in step S509 (not shown in Fig. 7A). A display instruction button 632, print button 633, and user box saving button 634 are respectively buttons used to accept selection of respective document processes. If the user presses a cancel button 635, he or she can instruct not to apply any processing to the document. When the user presses an OK button 636, he or she can settle the process selected using the buttons 632 to 634, and can instruct to apply that process to the document.

As described above, according to this embodiment, when the user of the MFP 101 selects a link of processing to be applied to the document on the screen shown in Fig. 6A, the MFP 101 checks whether or not that document can be processed by itself, and then executes the processing. That is, in this system, the user selects desired document processing on the screen shown in Fig. 6A. Therefore, in contrast to systems in the prior art, a print setting screen of the document, which is originally built in the MFP 101, can be prevented from being displayed to execute document processing which is not intended by the creator of the Web application 421. As described in step S503, since the Web application 421 need only the attached query parameter for each document processing respectively, the MFP 101 need not be controlled via a printer driver or the like, which simplifies the arrangement.

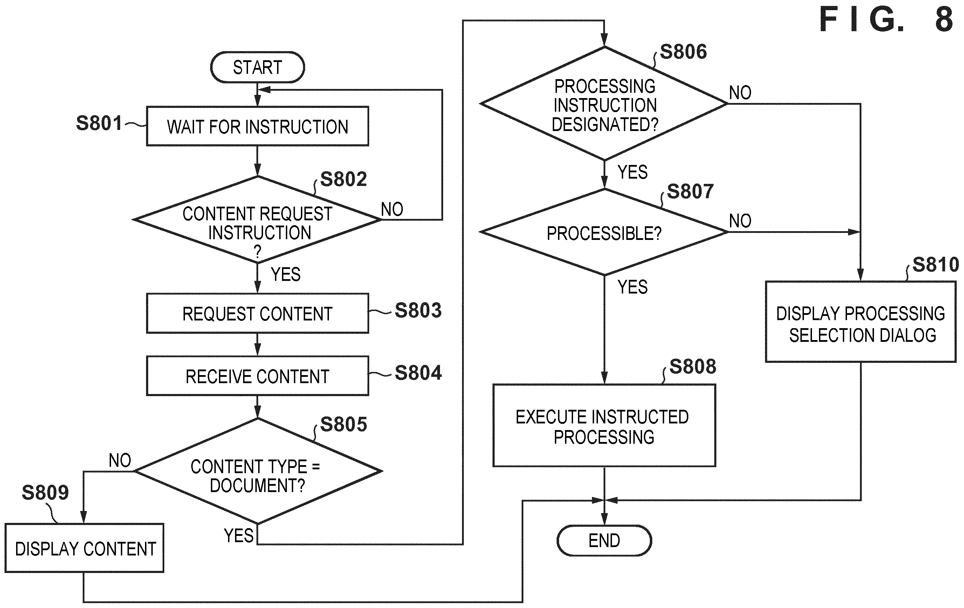

Fig. 8 is a flowchart showing the processes in step S506 (not shown in Fig. 8) and subsequent steps in Fig. 5 while being focused on the Web browser 400 (not shown in Fig. 8). The processes shown in Fig. 8 can be implemented when the CPU 201 (not shown in Fig. 8) of the MFP 101 (not shown in Fig. 8)executes control programs. In step S801, the Web browser 400 of the MFP 101 waits for a content acquisition instruction from the user. This step corresponds to step S506 in Fig. 5. The Web browser 400 checks in step S802 whether or not the user inputs the content acquisition instruction. For example, the operation instruction input unit 401 (not shown in Fig. 8) checks whether or not the content acquisition instruction is received and by determing whether or not the selection bwas made by the useron the screen shown in Fig. 6A. If the operation instruction input unit 401 determines in step S802 that no content acquisition instruction is received, step S801 is repeated.

If the operation instruction input unit 401 determines in step S802 that the content acquisition instruction is received, step S803 is processed. In step S803, the content acquisition unit 402 sends a content request to the designated URL address. This step corresponds to step S507 in Fig. 5. In step S804, the content acquisition unit 402 receives a content sent from the Web server 102 as a response. This step corresponds to step S509 in Fig. 5.

In step S805, the content analysis unit 403 (not shown in Fig. 8) analyzes the type of the content received in step S804 to check whether or not the content is a document of a type which can be processed by the MFP 101. If it is determined that the received content is not a document of a type which can be processed by the MFP 101, the content analysis unit 403 draws and generates a screen by analyzing the substance of the content in step S809. Then, the screen display unit 404 displays a screen on the operation display unit 211 based on the generated screen. In this case, the document of the type which cannot be processed by the MFP 101 includes, for example, an error screen. That is, although the MFP 101 requests a PDF file, when that PDF file is not available in the content database 422 (not shown in Fig. 8) of the Web server 102, the Web server 102 sends an HTML file which represents an error screen to the MFP 101 as a response, and that file is the document of the type which cannot be processed by the MFP 101. In this case, the error screen is displayed in step S809.

On the other hand, if it is determined in step S805 that the type of the received content is that which can be processed by the MFP 101, the processing instruction analysis unit 405 (not shown in Fig. 8) determines in step S806, whether or not a document processing instruction for the received document is designated. The processing instruction analysis unit 405 analyzes the URL address of the content request in step S803 corresponding to the content received in step S804 to check if a query parameter is attached. If it is determined that no query parameter is attached, step S810 is processed. In step S810, the processing instruction analysis unit 405 displays a dialog requesting a user input about processing to be applied to the document. The dialog displayed in this case is the document processing inquiry dialog 631 shown in Fig. 7B. The processing instruction analysis unit 405 instructs the screen display unit 404 to display a screen of the document processing inquiry dialog 631.

If it is determined in step S806 that the document processing instruction for the received document is designated, step S807 is processed. The processing instruction analysis unit 405 checks in step S807 whether or not that document processing instruction is a valid instruction for the MFP 101 and can be processed by the MFP 101. For example, an instruction which is valid for the MFP 101 and can be processed by the MFP 101 are functions of the MFP 101. If it is determined that the instruction is not valid for the MFP 101 or it cannot be processed by the MFP 101, the process stops at step S810. On the document processing inquiry dialog 631 (not shown in Fig. 8) displayed for this situation only buttons corresponding to processes which can be processed by the MFP 101 of the buttons 632 to 634. If it is determined that none of the processes corresponding to the buttons 632 to 634 (not shown in Fig. 8) are executable, the processing instruction analysis unit 405 may display a message that advises accordingly on the document processing inquiry dialog 631. Also, in this case, even when the user presses the OK button 636, any processing is inhibited from being applied to the document.

If it is determined in step S807 that the instruction is valid for the MFP 101 and can be processed by the MFP 101, the processing execution unit 406 (not shown in Fig. 8) executes the document processing according to the instructed substance. For example, if the designated instruction is a print instruction for the document, the processing execution unit 406 instructs the print processing unit 409 (not shown in Fig. 8) to print the document. If the designated instruction is a display instruction of the document, the processing execution unit 406 instructs the document drawing unit 407 to draw a display screen of the document. On the other hand, if the designated instruction is a saving instruction of the document, the processing execution unit 406 instructs the saving processing unit 410 (not shown in Fig. 8) to save the document.

As described above, in this embodiment, according to an instruction based on the query parameter of the document link designated by the Web application 421 on the Web server 102, the Web browser 400 of the MFP 101 executes the document processing.

### Second Embodiment

The second embodiment will be described below. Note that the system configuration and the like are the same as those in the first embodiment. Differences from the first embodiment will be described below. In this embodiment, the Web browser 400 stores a predetermined server address. If the Web browser 400 receives a document from a Web server 102,103, it checks whether or not that document is received from the Web server having an address which matches the predetermined server address. Only when it is determined that the document is received from the Web server having the address that matches the predetermined server address, document processing designated for that document is executed.

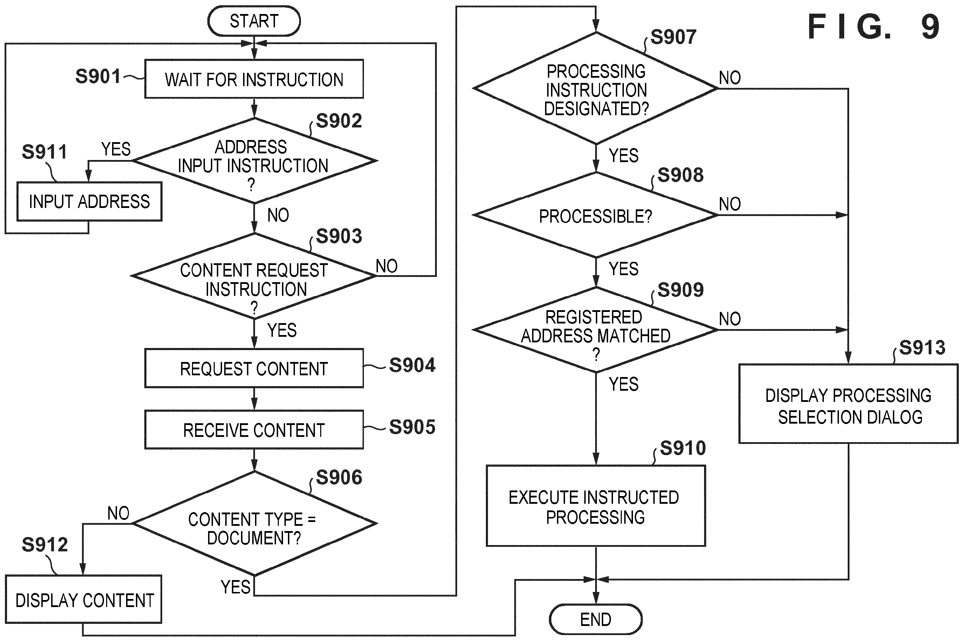

Fig. 9 is a flowchart showing the sequence of document processing of the Web browser 400 (not shown in Fig. 9) according to this embodiment. Respective processes shown in Fig. 9 can be implemented when the CPU 201 (not shown in Fig. 9) of the MFP 101 (not shown in Fig. 9) executes control programs. In step S901, the Web browser 400 waits for an input operation from the user. The Web browser 400 checks in step S902 whether or not the input operation from the user is detected. For example, the operation instruction input unit 401 (not shown in Fig. 9) checks whether or not the user has made an input operation of a server address which permits document processing. If it is determined in step S902 that the input operation of the server address has been made, input processing of the server address is executed in step S911.

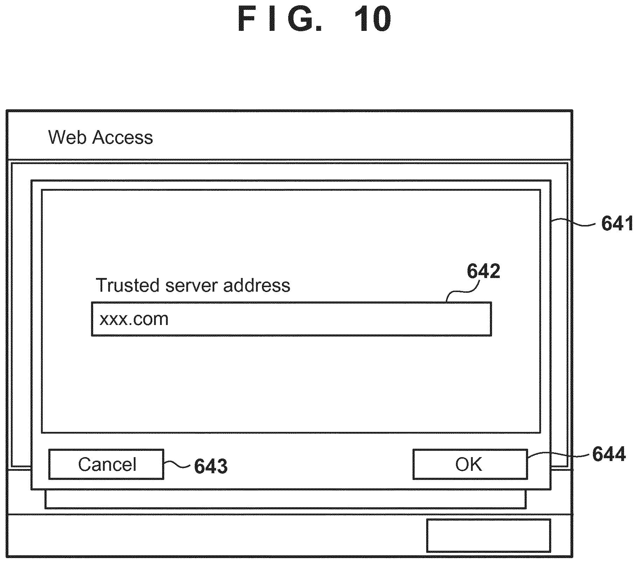

Fig. 10 is a view showing an example of a server address input instruction screen, which is displayed by the saving processing unit 410 (not shown in Fig. 10) of the Web browser 400 (not shown in Fig. 10) on the operation display unit 211 (not shown in Fig. 10) in step S911 (not shown in Fig. 10). The Web browser 400 displays a server address input dialog 641 to prompt the user to designate an address of a Web server. The user can input an address of a Web server 102,103 via an address input field 642. In this embodiment, only if a document is received from a Web server having an address that matches the address provided by the user in the address input field 642, document processing is executed. The user can cancel the substance input to the address input field 642 by pressing a cancel button 643. On the other hand, the user acknowledges a setting of an address input to the address input field 642 by pressing an OK button 644.

In step S911 (not shown in Fig. 10), the address saving unit 408 (not shown in Fig. 10) displays the server address input dialog 641 (not shown in Fig. 10) on the operation display unit 211, and saves the server address information input by the user in the address database 411 (not shown in Fig. 10). After step S911, the process returns to step S901. If it is determined in step S902 that no server address input instruction is detected, the Web browser 400 checks in step S903 (not shown in Fig. 10) whether or not the user inputs a content acquisition instruction. This process is the same as that of step S802 (not shown in Fig. 10) of the first embodiment. Processes in steps S904 to S908 in Fig. 9 are the same as those in steps S803 to S807 of the first embodiment.

In step S909 (not shown in Fig. 10), the processing execution unit 406 (not shown in Fig. 10) acquires an address of the Web server 102,103, from which the content is received in step S905 (not shown in Fig. 10), from the processing instruction analysis unit 405. Also, the processing execution unit 406 (not shown in Fig. 10) acquires the address saved in the address database 411. Then, the processing execution unit 406 checks whether or not the address of the Web server 102,103 from which the document is received matches that saved in the address database 411. In this case, if it is determined that the address of the Web server 102,103 from which the document is received matches that saved in the address database 411, designated document processing is executed in step S910. Step S910 (not shown in Fig. 10) is comparable with step S808 of the first embodiment. On the other hand, if it is determined in step S909 that the address of the Web server 102,103 does not match with the saved one in the address database 411, the document processing inquiry dialog 631 (not shown in Fig. 10) is displayed for the user in step S913 (not shown in Fig. 10). Step S913 is the same as the process of step S810 of the first embodiment. If it is determined in step S906 that the type of the received content is that which cannot be processed by the MFP 101, the content analysis unit 403 analyzes the substance of the content to draw and generate a screen in step S912. Step S912 is the same as the process of step S809 of the first embodiment.

As described above, according to the second embodiment, designated document processing is executed only for a document which is received from a Web server having an address which matches the predetermined address. Thus, documents in large quantities can be prevented from being unwantedly printed by a document processing instruction received from an ill-intended Web server, thus maintaining high security.

### Other Embodiments

While the present invention has been described with reference to exemplary embodiments, it is to be understood that the invention is not limited to the disclosed exemplary embodiments.

## Claims

1. An information processing system comprising a Web server (102) and a printing apparatus (101) configured to communicate with the Web server (102):
the printing apparatus (101) comprising:
web page receiving means (402) for receiving, from the Web server (102), a web page including a URL, wherein the URL indicates a link to a document;
display means (404) for displaying, by a web browser (400), a screen, based on the web page received by said web page receiving means;
selecting means (401) for selecting, in accordance with a user operation, the URL via the screen displayed by said display means; and
request means (402) for sending, to the web server (102), a request for a document which is stored in a database (422) and which is designated by the URL selected by said selecting means; and
the Web server (102) comprising:
receiving means (421) for receiving from the database (422), the document specified by the URL selected by said selecting means in accordance with receiving the request from the printing apparatus (101); and
sending means (421) for sending, to the printing apparatus (101), the document received by said receiving means of the Web server (102),
wherein the printing apparatus (101) further comprises:
receiving means (402) for receiving the document transmitted from the Web server (102);
analysis means (403) for analysing the type of the document to determine whether the document is of a type which can be processed by the printing apparatus (101), wherein if it is determined that the document is of a type which cannot be processed by the printing apparatus, the analysis means (403) draws and generates a screen by analysing the content of the document;
determination means (405) for, in a case where it is determined that the document is of a type which can be processed by the printing apparatus, determining whether a query parameter is attached to the URL which has been selected by said selecting means, the query parameter defining a processing to be executed to the document, and determining whether the processing to be executed to the document is a valid processing for the printing apparatus (101);
displaying means for displaying, by a Web browser (400), a processing setting screen for receiving a processing to be executed to the document in a case where said determination means determines that the query parameter is not attached to the URL which has been selected by said selecting means, or in a case where the determination means determines that the processing is not a valid processing for the printing apparatus (101); and
processing means (200, 213, 214) for executing, without causing said displaying means to display the processing setting screen, view processing of the document received by said receiving means of the printing apparatus in a case where said determination means determines that the query parameter is attached to the URL which has been selected by said selecting means, the processing is a valid processing for the printing apparatus (101), and the query parameter defines the view processing of the document,
wherein said processing means (200, 213, 214) executes, without causing said displaying means to display the processing setting screen, print processing of the document received by said receiving means of the printing apparatus in a case where said determination means determines that the query parameter is attached to the URL which has been selected by said selecting means, the processing is a valid processing for the printing apparatus (101), and the query parameter defines the print processing of the document.

2. The system according to claim 1, wherein the printing apparatus further comprises:
checking means for checking whether or not the Web server (102, 103) is a Web server which is designated in advance,
wherein in a case where it is determined by a checking result of said checking means that the Web server is the Web server which is designated in advance, said determination means determines that the query parameter is attached to the URL which has been selected by said selecting means, and the query parameter defines the print processing of the document, said processing means executes, without causing said displaying means to display the processing setting screen, the print processing of the document received by said receiving means of the printing apparatus, and in a case where it is determined by a checking result of said checking means that the Web server is not the Web server which is designated in advance, said processing means does not execute the print processing of the document received by said receiving means of the printing apparatus.

3. An information processing method for a system comprising a Web server (102) and a printing apparatus (101) configured to communicate with the Web server, the method comprising:
at the printing apparatus (101):
receiving (S504), from the Web server, a web page including a URL, wherein the URL indicates a link to a document;
displaying a screen (S505), by a Web browser (400), based on the received web page;
selecting (S506), in accordance with a user operation, the URL via the displayed screen; and
sending (S507), to the Web server (102), a request for a document which is stored in a database (422) and which is designated by the URL selected by said selecting step; and
at the Web server (102, 103):
receiving (S508) from the database (422) the document specified by the URL selected by said selecting step in accordance with receiving the request; and
sending (S509), to the printing apparatus (101), the received document,
wherein the method further comprises:
at the printing apparatus (101):
receiving (S509) the document transmitted from the Web server (102);
analysing the type of the document to determine whether the document is of a type which can be processed by the printing apparatus (101), wherein if it is determined that the document is of a type which cannot be processed by the printing apparatus, drawing and generating a screen by analysing the content of the document;
determining (S806), in a case where it is determined that the document is of a type which can be processed by the printing apparatus, whether a query parameter is attached to the URL which has been selected in said selecting step, the query parameter defining a processing to be executed to the document, and determining whether the processing to be executed to the document is a valid processing for the printing apparatus (101);
displaying (S810), by a Web browser (400), a processing setting screen for receiving a processing to be executed to the document in a case where said determination step determines that the query parameter is not attached to the URL which has been selected in said selecting step, or in a case where the processing is not a valid processing for the printing apparatus (101); and
executing, without causing said displaying step to display the processing setting screen, view processing (S808) of the received document in a case where said determination step determines that the query parameter is attached to the URL which has been selected in said selecting step, the processing is a valid processing for the printing apparatus (101), and the query parameter defines the view processing of the document,
wherein said executing step executes, without causing said displaying step to display the processing setting screen, print processing of the received document in a case where said determination step determines that the query parameter is attached to the URL which has been selected by said selecting step, the processing is a valid processing for the printing apparatus (101), and the query parameter defines the print processing of the document.

4. The method according to claim 3, the method further comprising:
at the printing apparatus (101):
checking (S909) whether or not the Web server (102, 103) is a Web server which is designated in advance,
wherein in a case where it is determined by a checking result of said checking step that the Web server is the Web server which is designated in advance, said determination step determines that the query parameter is attached to the URL which has been selected by said selecting step, and the query parameter defines the print processing of the document, said executing step executes, without causing said displaying step to display the processing setting screen, the print processing of the document received by said receiving step, and in a case where it is determined by a checking result of said checking step that the Web server is not the Web server which is designated in advance, said executing step does not execute the printing of the document received by said receiving step.

5. A computer-readable storage medium storing a program which, when executed on a computer causes the computer to perform the method of claim 3 or claim 4.

## Patentansprüche

1. Informationsverarbeitungssystem, umfassend einen Webserver (102) und eine Druckvorrichtung (101), die konfiguriert ist, mit dem Webserver (102) zu kommunizieren:
wobei die Druckvorrichtung (101) umfasst:
eine Webseiten-Empfangseinrichtung (402) zum Empfangen einer Webseite mit einer URL vom Webserver (102), wobei die URL einen Link zu einem Dokument angibt;
eine Anzeigeeinrichtung (404) zum Anzeigen eines Bildschirms mittels eines Webbrowsers (400), basierend auf der von der Webseiten-Empfangseinrichtung empfangenen Webseite;
eine Auswahleinrichtung (401) zum Auswählen, gemäß einer Benutzerbedienung, der URL über den mittels der Anzeigeeinrichtung angezeigten Bildschirm; und
eine Anforderungseinrichtung (402) zum Senden einer Anforderung für ein in einer Datenbank (422) gespeichertes Dokument, welches durch die von der Auswahleinrichtung ausgewählte URL bezeichnet wird, an den Webserver (102); und
wobei der Webserver (102) umfasst:
eine Empfangseinrichtung (421) zum Empfangen des durch die von der Auswahleinrichtung ausgewählte URL spezifizierten Dokuments von der Datenbank (422) gemäß dem Empfang der Anforderung von der Druckvorrichtung (101); und
eine Sendeeinrichtung (421) zum Senden des von der Empfangseinrichtung des Webservers (102) empfangenen Dokuments an die Druckvorrichtung (101),
wobei die Druckvorrichtung (101) ferner umfasst:
eine Empfangseinrichtung (402) zum Empfangen des vom Webserver (102) übertragenen Dokuments;
eine Analyseeinrichtung (403) zum Analysieren des Dokumententyps, um zu bestimmen, ob das Dokument einem durch die Druckvorrichtung (101) verarbeitbaren Typ entspricht, wobei, falls bestimmt wird, dass das Dokument einem durch die Druckvorrichtung nicht verarbeitbaren Typ entspricht, die Analyseeinrichtung (403) einen Bildschirm durch Analysieren des Inhalts des Dokuments zeichnet und erzeugt;
eine Bestimmungseinrichtung (405) zum Bestimmen, falls bestimmt wird, dass das Dokument einem durch die Druckvorrichtung verarbeitbaren Typ entspricht, ob ein Anfrageparameter an der von der Auswahleinrichtung ausgewählten URL angefügt ist, wobei der Anfrageparameter eine an dem Dokument auszuführende Verarbeitung definiert, und zum Bestimmen, ob die am Dokument auszuführende Verarbeitung eine für die Druckvorrichtung (101) gültige Verarbeitung ist;
eine Anzeigeeinrichtung zum Anzeigen, mittels eines Webbrowsers (400), von einem Verarbeitungseinstellbildschirm zum Entgegennehmen einer am Dokument auszuführenden Verarbeitung, falls die Bestimmungseinrichtung bestimmt, dass der Anfrageparameter an der von der Auswahleinrichtung ausgewählten URL nicht angefügt ist, oder falls die Bestimmungseinrichtung bestimmt, dass die Verarbeitung keine für die Druckvorrichtung (101) gültige Verarbeitung ist; und
eine Verarbeitungseinrichtung (200, 213, 214) zum Ausführen, ohne Veranlassen der Anzeigeeinrichtung, den Verarbeitungseinstellbildschirm anzuzeigen, einer Ansichtsverarbeitung des von der Empfangseinrichtung der Druckvorrichtung empfangenen Dokuments, falls die Bestimmungseinrichtung bestimmt, dass der Anfrageparameter an der von der Auswahleinrichtung ausgewählten URL angefügt ist, die Verarbeitung eine für die Druckvorrichtung (101) gültige Verarbeitung ist, und der Anfrageparameter die Ansichtsverarbeitung des Dokuments definiert,
wobei die Verarbeitungseinrichtung (200, 213, 214), ohne Veranlassen der Anzeigeeinrichtung, den Verarbeitungseinstellbildschirm anzuzeigen, eine Druckverarbeitung des von der Empfangseinrichtung der Druckvorrichtung empfangenen Dokuments ausführt, falls die Bestimmungseinrichtung bestimmt, dass der Anfrageparameter an der von der Auswahleinrichtung ausgewählten URL angefügt ist, die Verarbeitung eine für die Druckvorrichtung (101) gültige Verarbeitung ist und der Anfrageparameter die Druckverarbeitung des Dokuments definiert.

2. System nach Anspruch 1, wobei die Druckvorrichtung ferner umfasst:
eine Überprüfungseinrichtung zum Überprüfen, ob der Webserver (102, 103) ein vorab festgelegter Webserver ist oder nicht,
wobei, falls durch ein Überprüfungsergebnis der Überprüfungseinrichtung bestimmt wird, dass der Webserver der vorab festgelegte Webserver ist, die Bestimmungseinrichtung bestimmt, dass der Anfrageparameter an der von der Auswahleinrichtung ausgewählten URL angefügt ist, und der Anfrageparameter die Druckverarbeitung des Dokuments definiert, die Verarbeitungseinrichtung, ohne Veranlassen der Anzeigeeinrichtung, den Verarbeitungseinstellbildschirm anzuzeigen, die Druckverarbeitung des von der Empfangseinrichtung der Druckvorrichtung empfangenen Dokuments ausführt, und, falls durch ein Überprüfungsergebnis der Überprüfungseinrichtung bestimmt wird, dass der Webserver nicht der vorab festgelegte Webserver ist, die Verarbeitungseinrichtung die Druckverarbeitung des von der Empfangseinrichtung der Druckvorrichtung empfangenen Dokuments nicht ausführt.

3. Informationsverarbeitungsverfahren für ein System, umfassend einen Webserver (102) und eine Druckvorrichtung (101), die konfiguriert ist, mit dem Webserver zu kommunizieren, wobei das Verfahren umfasst:
auf der Seite der Druckvorrichtung (101):
Empfangen (S504) einer Webseite mit einer URL vom Webserver, wobei die URL einen Link zu einem Dokument angibt;
Anzeigen eines Bildschirms (S505) mittels eines Webbrowsers (400), basierend auf der empfangenen Webseite;
Auswählen (S506), gemäß einer Benutzerbedienung, der URL über den angezeigten Bildschirm; und
Senden (S507) einer Anforderung für ein in einer Datenbank (422) gespeichertes Dokument, welches durch die im Auswahlschritt ausgewählte URL bezeichnet wird, an den Webserver (102); und
auf der Seite des Webservers (102, 103):
Empfangen (S508) des durch die im Auswahlschritt ausgewählte URL spezifizierten Dokuments von der Datenbank (422) gemäß dem Empfang der Anforderung; und
Senden (S509) des empfangenen Dokuments an die Druckvorrichtung (101),
wobei das Verfahren ferner umfasst:
auf der Seite der Druckvorrichtung (101):
Empfangen (S509) des vom Webserver (102) übertragenen Dokuments;
Analysieren des Dokumententyps, um zu bestimmen, ob das Dokument einem durch die Druckvorrichtung (101) verarbeitbaren Typ entspricht, wobei, falls bestimmt wird, dass das Dokument einem durch die Druckvorrichtung nicht verarbeitbaren Typ entspricht, Zeichnen und Erzeugen eines Bildschirms durch Analysieren des Inhalts des Dokuments;
Bestimmen (S806), falls bestimmt wird, dass das Dokument einem durch die Druckvorrichtung verarbeitbaren Typ entspricht, ob ein Anfrageparameter an der im Auswahlschritt ausgewählten URL angefügt ist, wobei der Anfrageparameter eine am Dokument auszuführende Verarbeitung definiert, und Bestimmen, ob die am Dokument auszuführende Verarbeitung eine für die Druckvorrichtung (101) gültige Verarbeitung ist;
Anzeigen (S810), mittels eines Webbrowsers (400), von einem Verarbeitungseinstellbildschirm zum Entgegennehmen einer am Dokument auszuführenden Verarbeitung, falls der Bestimmungsschritt bestimmt, dass der Anfrageparameter an der im Auswahlschritt ausgewählten URL nicht angefügt ist, oder falls die Verarbeitung keine für die Druckvorrichtung (101) gültige Verarbeitung ist; und
Ausführen, ohne Veranlassen des Anzeigeschritts, den Verarbeitungseinstellbildschirm anzuzeigen, einer Ansichtsverarbeitung (S808) des empfangenen Dokuments, falls der Bestimmungsschritt bestimmt, dass der Anfrageparameter an der im Auswahlschritt ausgewählten URL angefügt ist, die Verarbeitung eine für die Druckvorrichtung (101) gültige Verarbeitung ist und der Anfrageparameter die Ansichtsverarbeitung des Dokuments definiert,
wobei der Ausführungsschritt, ohne Veranlassen des Anzeigeschritts, den Verarbeitungseinstellbildschirm anzuzeigen, eine Druckverarbeitung des empfangenen Dokuments ausführt, falls der Bestimmungsschritt bestimmt, dass der Anfrageparameter an der im Auswahlschritt ausgewählten URL angefügt ist, die Verarbeitung eine für die Druckvorrichtung (101) gültige Verarbeitung ist, und der Anfrageparameter die Druckverarbeitung des Dokuments definiert.

4. Verfahren nach Anspruch 3, wobei das Verfahren ferner umfasst:
auf der Seite der Druckvorrichtung (101):
Überprüfen (S909), ob der Webserver (102, 103) ein vorab festgelegter Webserver ist oder nicht,
wobei, falls durch ein Überprüfungsergebnis des Überprüfungsschritts bestimmt wird, dass der Webserver der vorab festgelegte Webserver ist, der Bestimmungsschritt bestimmt, dass der Anfrageparameter an der im Auswahlschritt ausgewählten URL angefügt ist, und der Anfrageparameter die Druckverarbeitung des Dokuments definiert, der Ausführungsschritt, ohne Veranlassen des Anzeigeschritts, den Verarbeitungseinstellbildschirm anzuzeigen, die Druckverarbeitung des vom Empfangsschritt empfangenen Dokuments ausführt, und, falls durch ein Überprüfungsergebnis des Überprüfungsschritts bestimmt wird, dass der Webserver nicht der vorab festgelegte Webserver ist, der Ausführungsschritt das Drucken des im Empfangsschritt empfangenen Dokuments nicht ausführt.

5. Computerlesbares Speichermedium, das ein Programm speichert, welches bei Ausführung auf einem Computer diesen veranlasst, das Verfahren nach Anspruch 3 oder Anspruch 4 durchzuführen.

## Revendications

1. Système de traitement d'informations comprenant un serveur Web (102) et un appareil d'impression (101) configuré pour communiquer avec le serveur Web (102) :
l'appareil d'impression (101) comprenant :
un moyen de réception de page Web (402) destiné à recevoir, du serveur Web (102), une page Web comprenant une adresse universelle, URL, où l'URL indique un lien vers un document ;
un moyen d'affichage (404) destiné à afficher un écran, par un navigateur Web (400), sur la base de la page Web reçue par ledit moyen de réception de page Web ;
un moyen de sélection (401) destiné à sélectionner, conformément à une opération d'utilisateur, l'URL par le biais de l'écran affiché par ledit moyen d'affichage ; et
un moyen de demande (402) destiné à envoyer, au serveur Web (102), une demande concernant un document qui est mémorisé dans une base de données (422) et qui est désigné par l'URL sélectionnée par ledit moyen de sélection ; et
le serveur Web (102) comprenant :
un moyen de réception (421) destiné à recevoir, de la base de données (422), le document spécifié par l'URL sélectionnée par ledit moyen de sélection conformément à la réception de la demande à partir de l'appareil d'impression (101) ; et
un moyen d'envoi (421) destiné à envoyer, à l'appareil d'impression (101), le document reçu par ledit moyen de réception du serveur Web (102),
dans lequel l'appareil d'impression (101) comprend en outre :
un moyen de réception (402) destiné à recevoir le document transmis à partir du serveur Web (102) ;
un moyen d'analyse (403) destiné à analyser le type du document pour déterminer si le document est d'un type qui peut être traité par l'appareil d'impression (101), où, s'il est déterminé que le document est d'un type qui ne peut pas être traité par l'appareil d'impression, le moyen d'analyse (403) dessine et génère un écran par une analyse du contenu du document ;
un moyen de détermination (405) destiné, dans un cas dans lequel il est déterminé que le document est d'un type qui peut être traité par l'appareil d'impression, à déterminer si un paramètre d'interrogation est annexé à l'URL qui a été sélectionnée par ledit moyen de sélection, le paramètre d'interrogation définissant un traitement à appliquer au document, et à déterminer si le traitement à appliquer au document est un traitement valide pour l'appareil d'impression (101) ;
un moyen d'affichage destiné à afficher, par un navigateur Web (400), un écran de définition de traitement destiné à recevoir un traitement à appliquer au document dans un cas dans lequel ledit moyen de détermination détermine que le paramètre d'interrogation n'est pas annexé à l'URL qui a été sélectionnée par ledit moyen de sélection, ou dans un cas dans lequel le moyen de détermination détermine que le traitement n'est pas un traitement valide pour l'appareil d'impression (101) ; et
un moyen de traitement (200, 213, 214) destiné à exécuter, sans amener ledit moyen d'affichage à afficher l'écran de définition de traitement, un traitement de visualisation du document reçu par ledit moyen de réception de l'appareil d'impression dans un cas dans lequel ledit moyen de détermination détermine que le paramètre d'interrogation est annexé à l'URL qui a été sélectionnée par ledit moyen de sélection, que le traitement est un traitement valide pour l'appareil d'impression (101), et que le paramètre d'interrogation définit le traitement de visualisation du document,
dans lequel ledit moyen de traitement (200, 213, 214) exécute, sans amener ledit moyen d'affichage à afficher l'écran de définition de traitement, un traitement d'impression du document reçu par ledit moyen de réception de l'appareil d'impression dans un cas dans lequel ledit moyen de détermination détermine que le paramètre d'interrogation est annexé à l'URL qui a été sélectionnée par ledit moyen de sélection, que le traitement est un traitement valide pour l'appareil d'impression (101), et que le paramètre d'interrogation définit le traitement d'impression du document.

2. Système selon la revendication 1, dans lequel l'appareil d'impression comprend en outre ;
un moyen de vérification destiné à vérifier si le serveur Web (102, 103) est, ou non, un serveur Web qui a été désigné à l'avance,
dans lequel, dans un cas dans lequel il est déterminé, par un résultat de vérification dudit moyen de vérification, que le serveur Web est le serveur Web qui a été désigné à l'avance, ledit moyen de détermination détermine que le paramètre d'interrogation est annexé à l'URL qui a été sélectionnée par ledit moyen de sélection, et que le paramètre d'interrogation définit le traitement d'impression du document, ledit moyen de traitement exécute, sans amener ledit moyen d'affichage à afficher l'écran de définition de traitement, le traitement d'impression du document reçu par ledit moyen de réception de l'appareil d'impression et, dans un cas dans lequel il est déterminé, par un résultat de vérification dudit moyen de vérification, que le serveur Web n'est pas le serveur Web qui a été désigné à l'avance, ledit moyen de traitement n'exécute pas le traitement d'impression du document reçu par ledit moyen de réception de l'appareil d'impression.

3. Procédé de traitement d'informations destiné à un système comprenant un serveur Web (102) et un appareil d'impression (101) configuré pour communiquer avec le serveur Web, le procédé comprenant les étapes consistant à :
au niveau de l'appareil d'impression (101) :
recevoir (S504), du serveur Web (102), une page Web comprenant une adresse universelle, URL, dans lequel l'URL indique un lien vers un document ;
afficher un écran (S505), par un navigateur Web (400), sur la base de la page Web reçue ;
sélectionner (S506), conformément à une opération d'utilisateur, l'URL par le biais de l'écran affiché ; et
envoyer (S507), au serveur Web (102), une demande concernant un document qui est mémorisé dans une base de données (422) et qui est désigné par l'URL sélectionnée à ladite étape de sélection ; et
au niveau du serveur Web (102, 103) :
recevoir (S508), de la base de données (422), le document spécifié par l'URL sélectionnée à ladite étape de sélection conformément à la réception de la demande ; et
envoyer (S509), à l'appareil d'impression (101), le document reçu,
le procédé comprenant en outre les étapes consistant à :
au niveau de l'appareil d'impression (101) :
recevoir (S509) le document transmis à partir du serveur Web (102) ;
analyser le type du document pour déterminer si le document est d'un type qui peut être traité par l'appareil d'impression (101), où s'il est déterminé que le document est d'un type qui ne peut pas être traité par l'appareil d'impression, dessiner et générer un écran par une analyse du contenu du document ;
déterminer (S806), dans un cas dans lequel il est déterminé que le document est d'un type qui peut être traité par l'appareil d'impression, si un paramètre d'interrogation est annexé à l'URL qui a été sélectionnée à ladite étape de sélection, le paramètre d'interrogation définissant un traitement à appliquer au document, et déterminer si le traitement à appliquer au document est un traitement valide pour l'appareil d'impression (101) ;
afficher (S810), par un navigateur Web (400), un écran de définition de traitement destiné à recevoir un traitement à appliquer au document dans un cas dans lequel ladite étape de détermination détermine que le paramètre d'interrogation n'est pas annexé à l'URL qui a été sélectionnée à ladite étape de sélection, ou dans un cas dans lequel le traitement n'est pas un traitement valide pour l'appareil d'impression (101) ; et
exécuter, sans amener ladite étape d'affichage à afficher l'écran de définition de traitement, un traitement de visualisation (S808) du document reçu dans un cas dans lequel ladite étape de détermination détermine que le paramètre d'interrogation est annexé à l'URL qui a été sélectionnée à ladite étape de sélection, que le traitement est un traitement valide pour l'appareil d'impression (101), et que le paramètre d'interrogation définit le traitement de visualisation du document,
dans lequel ladite étape d'exécution exécute, sans amener ladite étape d'affichage à afficher l'écran de définition de traitement, un traitement d'impression du document reçu dans un cas dans lequel ladite étape de détermination détermine que le paramètre d'interrogation est annexé à l'URL qui a été sélectionnée à ladite étape de sélection, que le traitement est un traitement valide pour l'appareil d'impression (101), et que le paramètre d'interrogation définit le traitement d'impression du document.

4. Procédé selon la revendication 3, le procédé comprenant en outre l'étape consistant à :
au niveau de l'appareil d'impression (101) :
vérifier (S909) si le serveur Web (102, 103) est, ou non, un serveur Web qui a été désigné à l'avance,
dans lequel, dans un cas dans lequel il est déterminé, par un résultat de vérification de ladite étape de vérification, que le serveur Web est le serveur Web qui a été désigné à l'avance, ladite étape de détermination détermine que le paramètre d'interrogation est annexé à l'URL qui a été sélectionnée à ladite étape de sélection, et que le paramètre d'interrogation définit le traitement d'impression du document, ladite étape d'exécution exécute, sans amener ladite étape d'affichage à afficher l'écran de définition de traitement, le traitement d'impression du document reçu à ladite étape de réception de l'appareil d'impression et, dans un cas dans lequel il est déterminé, par un résultat de vérification de ladite étape de vérification, que le serveur Web n'est pas le serveur Web qui a été désigné à l'avance, ladite étape d'exécution n'exécute pas l'impression du document reçu à ladite étape de réception.

5. Support d'informations lisible par ordinateur contenant en mémoire un programme qui, lorsqu'il est exécuté sur un ordinateur, amène l'ordinateur à mettre en œuvre le procédé selon la revendication 3 ou la revendication 4.
